# EUROPEAN PATENT APPLICATION

(11) **EP 1 555 593 A1**
(43) Date of publication of application: **20.07.2005**
(21) Application number: 03807724.4
(22) Date of filing: 30.06.2003
(51) Int. Cl.: G06F 1/16

(54) **A WIRELESS HUMAN-MACHINE INTERACTIVE DEVICE OF A PERSONAL COMPUTER**

(30) Priority: 19.09.2002 CN 02130939
(71) Applicant: Lenovo (Beijing) Limited, Haidian District, Beijing 100085 (CN)
(72) Inventor: YANG, Tao, Beijing 100085 (CN); LI, Ning No. 6 Chuang Ye Road, Beijing 100085 (CN); HU, Zhaowei No. 6 Chuang Ye Road, Beijing 100085 (CN)
(74) Representative: Moir, Michael Christopher
(86) International application number: PCT/CN2003/000517
(87) International publication number: WO 2004/034239

(57) **Abstract**

The invention relates to a wireless human-machine interactive device of personal computer including two parts, a display and a base. The display can be independently used separately from the base. The key features are in that: the display output module comprising at least a central processing unit (CPU) and a liquid crystal display (LCD), a main board containing a supply circuit for providing a voltage conversion for the main board and for charging a secondary battery, a backlight board, a touch screen control board, a peripheral interface board comprising all Input/Output (I/O) device interfaces and a secondary battery are mounted on a rear part of the display; an LCD control board and a supply adapter for converting a commercial supply into a direct current (DC) supply and supplying the LCD control board with power is mounted in the base; and the electrical connections between the base and the display are achieved by gilded pins (golden finger) or a multi-pin/multi-jack connector. The present invention can also be applied to a normal liquid crystal display of personal computer. While the inventive wireless human-machine interactive device or liquid crystal display ensures all the other functions, the appearance or the structure thereof is thinner, lighter, and more beautiful with a good visual and practical effect.

## Description

### BACKGROUND OF THE INVENTION

### FIELD OF INVENTION

This invention relates to a wireless human-machine interactive device of personal computer, more precisely, to a wireless human-machine interactive device of a personal computer with a thinner and lighter appearance, and belongs to the field of computer technology.

### DESCRIPTION OF PRIOR ART

Currently, the personal computer is mainly classified into desktop computer, laptop computer and palm computer, in which the palm computer can also be called as personal digital assistant (PDA). The desktop computer has powerful functions and low prices and thus is a preliminary one in personal computers. The laptop computer facilitates mobile office but its price is higher than that of the desktop computer. And the palm computer or PDA is much smaller, lighter and thinner, is mainly used for the storage of personal information, schedule and the real-time transmission of information and so on. Although these three types of personal computer have their own respective advantages, some unsatisfied defects exist in each of them. For example, the volumes of the main body and the display of desktop computer are relatively larger, and its position is stationary, and thus the desktop computer needs a larger space on desk. And there are so many connection lines between the main body, the display, the keyboard, the mouse and the loudspeaker, which results in an untidy appearance. And also, a user of desktop computer must sit straightly, and watch the screen in full attention. As the time lapsing, a soreness of waist and a backache will be resulted in. Furthermore, the desktop computer is not suitable for a flexible, convenient and leisure manner for using a home computer, since a ideal home computer should be a wireless, movable, and multimedia information home electrical appliance. Although the laptop computer and the palm computer have the advantage of mobility and the user can use them for work or entertainment in a comfortable environment, such as in a sofa or on a bed, however, due to the limitation of the volume, the functions of the laptop computer and palm computer are not as powerful as those of the desktop computer, and the performance-price ratio is not as good as that of the desktop computer. Especially, the display screen of palm computer is small, and application software for it is less, and its functions are relatively simple.

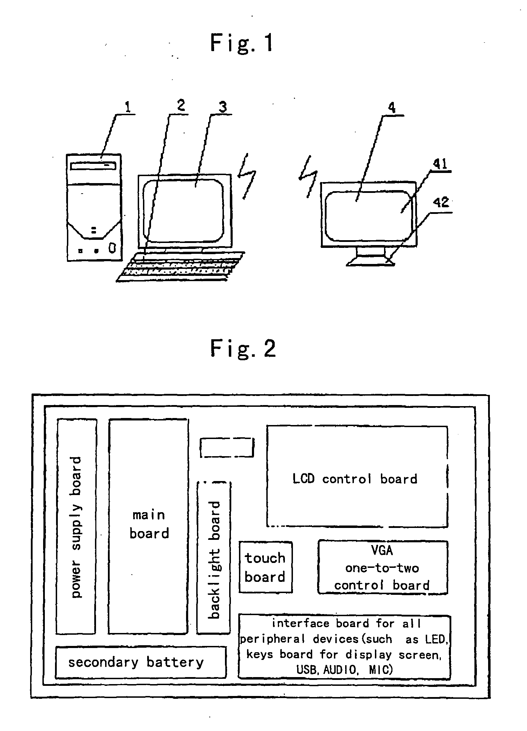

Under such a situation, a personal computer system based on a wireless human-machine interactive device is present in these years. Referring to Fig.1, this system is a novel computer taking advantage of the mobile advantages of laptop computer and palm computer and the potential functions of the desktop computer so as to broaden their application fields and cause the integration of these three types of computer, and it can provide the user of a better use experience and a higher performance-price ratio. As shown in Fig. 1, the personal computer system based on the wireless human-machine interactive device at least includes a personal computer constituted by a main body 1 of the computer, a peripheral device 2 of the main body and a display 3, and a wireless human-machine interactive device 4 separately provided. The wireless human-machine interactive device 4 and the main body 1 are both equipped with full-duplex wireless data communication transceivers, and the data are transmitted therebetween by means of wireless communication. Here, the peripheral device 2 generally includes some input/output devices such as keyboard, mouse and loudspeaker, and the display 3 may be a CRT display or a liquid crystal display (LCD).

The wireless human-machine interactive device 4 shown in Fig. 1 is a novel peripheral device of a computer and is composed of two parts, a display 41 and a base 42. The characterizes thereof are in that first of all, it can be applied to the above personal computer system as a second display for parallel operation, and on the other hand, since a peripheral device (external power) supply interface is provided on the base 42, it can charge a secondary battery in the wireless human-machine interactive device display 41 placed on the base 42 through the gilded pins (golden finger) or a multi-pin/multi-jack socket connector between the display and the base so that the display 41 can be used separately from the base 42 after the battery is fully-charged so as to become a wireless, movable information home electrical appliance with multimedia application softwarea multimedia application support, a wireless human-machine interactive device. However, since the device adds in a wireless human-machine interactive function, many relevant control circuits are added. For example, the display 41 in the wireless human-machine interactive device 4 is just constituted by adding in many new functional circuits on the basis of a normal liquid crystal display. These functional circuits mainly including a central processing unit (CPU), a memory, a full-duplex wireless communication module and a data receiver and decompressor module with an addition of the circuit modules such as a display output module, a audio output module, a bus extension port and a peripheral interface originally installed on the liquid crystal display are all mounted on its control main board. In addition, referring to Fig. 2, it further includes a power supply board for supplying power to entire wireless human-machine interactive device, an LCD control board, a backlight board, a touch screen control board, a VGA one-to-two control board and interface boards for all peripheral devices such as interface boards for display screen control keys and indicative lights LED, USB, AUDIO, MIC. All these circuit boards and battery need to be mounted in a limited space at a rear part of the display. Thus, not only the number of the circuit boards inside the display is increased so that it has a much larger thickness, a larger volume, and a larger weight than the normal liquid crystal display, which results in no benefits to mobile applications; but also since the crowded space and complex installation, the problems of mutual interference among circuits and poor heat emission will occurs.

As well known, the wireless human-machine interactive device of personal computer is generally composed of two parts, one LCD display and a base for carrying the display. When the LCD display is inserted in the base, the whole device functions as the display of the computer. When the LCD display is pulled out from the base, the display will function as the wireless human-machine interactive device of the computer. At this time, the contents displayed on the display is still the contents from the display card of the computer, but the display signals themselves is generated by a display chip on the main board of the wireless human-machine interactive device by aids of the reception through a wireless network card, and the display contents are processed by software on the main board. Generally, an inductive signal is set in a series of signals connected between the base and the wireless human-machine interactive device, and the inductive signal indicates whether the display in the wireless human-machine interactive device is inserted in the base or not. A switch circuit on the main board in the wireless human-machine interactive device operates according to the levels of the inductive signal.

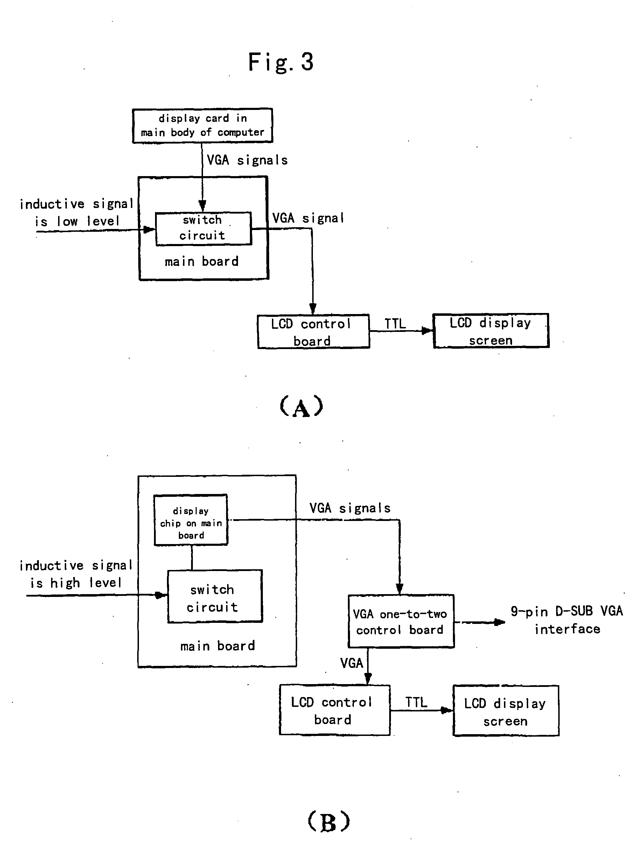

As shown in Fig. 3A, when the display is inserted in the base, i.e., the level of the inductive signal is low, an input video image adapter VGA signal generated by the display card in the main body of the computer is received by the switch circuit, and is output by the switch circuit to the LCD control board, and is converted into a TTL singal by a digital-to-analog, then is transmitted to the LCD display screen for imaging. Now, the entire device functions as a normal liquid crystal display of the computer. Referring to Fig. 3(B), when the display is pulled out from the base and the level of the inductive signal is high, the switch circuit controls the display chip on the main board in the wireless human-machine interactive device to output VGA signals, and directly sends the VGA signals to the VGA one-to-two control board. And then, the circuit board divides the VGA signal into two paths, one path of the signals arrives at a 9-pin D-SUB VGA interface of the wireless human-machine interactive device, and the other path of the signals arrives at the LCD control board, is digital-to-analog converted into TTL signals by the LCD control board, and is sent to the LCD display screen for imaging. Now, the display portion becomes the wireless human-machine interactive device. In the prior art as above, because the VGA signals are voltage-divided and amplified when it passes the one-to-two control board, it is prone to be influenced by noises and attenuates significantly. After pulled out from the base, when the wireless human-machine interactive device is connected to a projector or a CRT display through the VGA interface, the definition of image will be influenced so that the display quality is unsatisfied. And, the most significant problem is in that in spite that which path of the signals is selected by the switch circuit on the main board as the output, it must be controlled by the LCD control board for imaging. Therefore, the LCD control board must be settled inside the wireless human-machine interactive device, that is, inside the display, which results in the influence on the whole thickness and weight of the wireless human-machine interactive device and bad experiences of the users.

Now, all the electronic products tend to be full functional and a light and thin appearance. The display of the wireless human-machine interactive device mainly used for mobility can not satisfy the desires of the users in terms of the combination of the full functions and the light and thin appearance. Consequently, the existing wireless human-machine interactive device of personal computer can not fulfill the requirements of the marketing, and needs further improvements.

### SUMMARY OF THE INVENTION

Thus, an object of the present invention is to provide a wireless human-machine interactive device of personal computer which is used to overcome the defects of heaviness, uneasy to hold on, uncomfortable feelings caused by the installation of nearly all circuit boards and battery in a rear space of a display and the defects of mutual influence, poor heat emission caused by the crowded installation and while it ensures all the other functions, the appearance or the structure thereof is thinner, lighter, and more beautiful and thus enables it to fulfill the requirements of a user and to be competitive.

Another object of the present invention is to provide a liquid crystal display of personal computer to make a normal liquid crystal display thinner and lighter and have a good visual and practical effect so as to be fashion and adapted to the requirements of the marketing.

To achieve an object of the present invention, there is disclosed a wireless human-machine interactive device of personal computer comprising two parts, a display and a base, in which the display can be independently used separately from the base, which is characterized in that: a display output module comprising at least a central processing unit (CPU) and a liquid crystal display (LCD), a main board containing a supply circuit for providing a voltage conversion for the main board and charging a secondary battery, a backlight board, a touch screen control board, a peripheral device interface board comprising all Input/Output (I/O) device interfaces and a secondary battery are mounted on a rear part of the display; an LCD control board and a supply adapter for converting a commercial supply into a direct current (DC) supply and supplying power to the LCD control board is mounted in the base; and the electrical connections between the base and the display are achieved by gilded pins (golden finger) or a multi-pin/multi-jack connector.

Preferably, a memory, a full-duplex wireless communication module, a data receiver and decompressor module, a sound output module, a bus extension port and a peripheral device interface circuit module are further mounted on the main board in said display. Control keys for a display screen and an indicative light circuit board are further mounted on said peripheral device interface board.

Preferably, a thickness of said display is no more than 25 mm.

Preferably, the main board of said display forms a wireless data communication connection link directly with a main body of the personal computer, and the circuits on the main board form information exchange links with the circuits on the LCD control board within the base through the gilded pins (golden finger) or the multi-pin/multi-jack connector between the display and the base.

Preferably, the secondary battery mounted on the rear part of said display reduces from an existing three-series two-parallel one to a three-series one-parallel one.

To achieve another object of the present invention, there is disclosed a liquid crystal display of personal computer comprising two parts, a display main body and a base, which is characterized in that a backlight board, control keys for a display screen and a indicative light circuit board are mounted on a rear part of said display main body; an LCD control board and a power supply board are mounted in the base; and the electrical connections between the base and the display are achieved by gilded pins(golden finger) or a multi-pin/multi-jack connector.

Preferably, a thickness of said display main body is no more than 25 mm.

The inventive wireless human-machine interactive device of personal computer not only can be used as a second display with parallel operation so as to be applied to a personal computer system, but also can be used as a wireless, movable, independent information home electrical appliance supporting a multimedia function. The technical features of the present invention are in that: on the basis of the guarantee of functions, a modification to the layouts of the LCD control board and the power supply board is performed, and they are removed from the display and settled into the space of the base. Furthermore, in the base, the LCD control circuit board is independently supplied by the supply adapter for directly converting the AC into a DC supply, but is no longer supplied by the secondary battery. As such, not only the volume and weight occupied by the LCD control board and the power supply board are removed from the display portion, but also the supply circuit of the original power supply board is simplified, only if the power supply circuit for providing the voltage conversion for the main board of the display is reserved, because due to the transition of the LCD control board, the battery and its power supply converter circuit for supplying the LCD control board, after being modified as directly supplied by a AC-DC converter circuit, are moved into the base. Since the voltage converter circuit is relative simpler and has a small power consumption, the present invention settles the voltage converter circuit and the power supply circuit for charging the secondary battery directly on the main board. Although the main board is a little enlarged, there is no separate power supply board on the rear part of the display, and thus significant improvements on weight and volume are achieved.

And also, since the LCD control board and the power supply board for supplying it are moved into the base, a mutual relationship among the weights of respective circuit boards set inside the display and the base is improved. As compared with current situation where nearly all the circuit boards are collectively set in the display portion and the base is empty, the inventive means has a lower center of gravity and is more stable. Additionally, since the entire power consumption is lowered, the number of cores of the secondary battery in the display is correspondingly reduced, from the previous three-series two-parallel to three-series one-parallel, and a reduction of 0.2 kg in weight is gained.

With the improvements of the present invention in various terms, the weight of the display in the wireless human-machine interactive device of personal computer is significantly reduced. The user will not experience a heavy troublesome to continuously hold on when moving the display as. And, due to the reduction of the circuit boards in the rear part of the display, the area of the whole circuit boards is reduced, and the thickness of the display can be controlled within 25 mm. In additional, a peripheral space can be vacated so that a chamfer with a larger slope can be set at the peripheral edges of the rear panel of the display, and thus its appearance is looked like very thinner and lighter, and when the user holds it to move, he will have a very comfortable feeling and be easy to continuously hold on. Furthermore, with the rapid development of technology and the flourish requirements from users, due to the transition of the LCD control panel and the battery board, a large margin in the rear space of the display is left so as to provide the developers with a space for continuously developing the circuits on the control main board and their functions in order to make a greater development of the wireless human-machine interactive device of personal computer.

In present invention, the LCD control panel and the power supply board are set in the base so as to save the rear space of the display. On the basis of the guarantee of functions, the thickness of the monitor can be significantly reduced. And the present invention can also be applied to a normal liquid crystal display of personal computer to make its structure or appearance lighter and thinner.

### BRIEF DESCRIPTION OF THE DRAWINGS

Figure 1 is a schematic diagram of a structure of the personal computer system based on the wireless human-machine interactive device.
Figure 2 is a schematic diagram of a crowded structure due to the collective installation of all circuit boards in the rear space of the display when the current wireless human-machine interactive device is wirelessly connected to the personal computer.
Figures 3(A) and 3(B) are circuit block diagrams of the two situations where the wireless human-machine interactive device according to the prior art is inserted in and pulled out from the base, respectively.
Figures 4(A) and 4(B) are circuit block diagrams of the two situations where the wireless human-machine interactive device of personal computer according to the present invention is inserted in and pulled out from the base, respectively.
Figure 5 is a schematic diagram of a circuit board installation structure in the rear part of the display, after the LCD control board and the power supply board are removed out according to the present invention.
Figure 6 is a schematic diagram of a structure of the base, after the LCD control board and the power supply board are moved into the base according to the present invention.
Figure 7 is a schematic diagram of a connection structure of the display and the base of the wireless human-machine interactive device according to the present invention.
Figure 8 is a comparative diagram when the present invention is applied to monitor of personal computer so as to make its rear panel structure lighter and thinner.

### DETAILED DESCRIPTION OF PREFERRED EMBODIMENTS

Hereunder, the inventive wireless human-machine interactive device of personal computer, the circuit structures and operating principle after the improvements will be described in detail with reference to attached drawings.

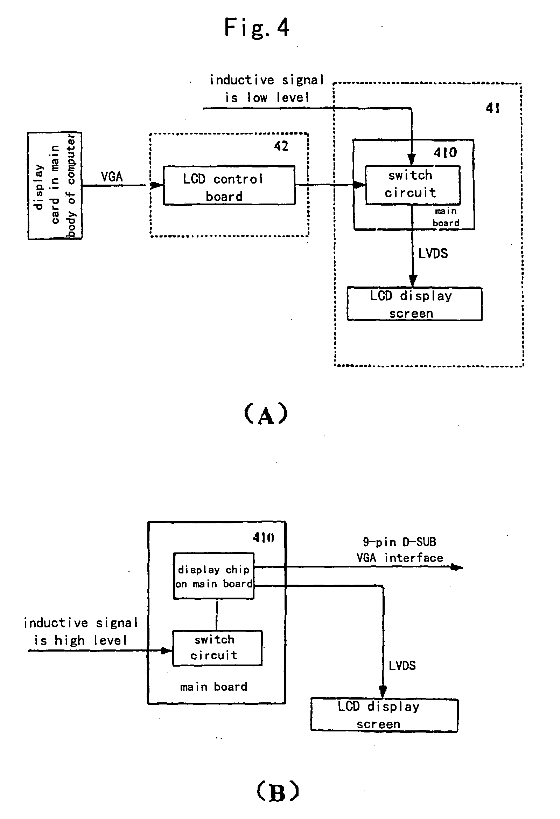

With respect to the two problems of the poor imaging definition and unsatisfied thickness and weight of the display according to the prior art, the present invention firstly improves the circuits. As shown in Figs. 4(A) and 4(B), the present invention changes the switch of VGA signals into the switch of a low voltage differential signal (LVDS), which is a premise to implement the present invention. To achieve the above switch, when the display 41 of the wireless human-machine interactive device is inserted in the base 42, i.e., the inductive signal is low level, the VGA signals generated by the display card in the main body of the computer are firstly input into the LCD control board situated in the base 42, and is digital-to-analog converted into corresponding LVDS signals by the LCD control board. Then, the LVDS signals are sent to the switch circuit of the main board 410 in the display 41 through the gilded pins (golden finger) or the multi-pin/multi-jack connector between the display 41 and the base 42. The switch circuit output the converted LVDS signals to the LCD display screen for imaging. At this time, the present invention functions as a normal liquid crystal display of a computer.

Because the graphic display chip on the main board within the wireless human-machine interactive device can simultaneously support the outputs of the LVDS digital signals or VGA analog signals of the VGA signals and the display contents thereof are identical, therefore, when the display 41 is pulled out from the base and the inductive signal is high level, the switch circuit on the main board 410 sends the LVDS signal output from the graphic display chip on the main board 410 within the wireless human-machine interactive device directly to the LCD display screen for imaging, and can also output the VGA signals to 9-pin D-SUB VGA interface in order to be used by a projector or other devices.

Since the imaging circuit of the present invention is very simple and does not have processing circuits such as a voltage-divided circuit and an amplifier circuit, the displayed image is clear, reliable, vivid and fidelity, especially when the external VGA interface is used to connect a projector or a display. More important, since improvements have been made on the above output display signal circuit (with respect to the improvements on the circuit, other patent applications have been filed, and will not be described in detail here), the original VGA one-to-two control board is omitted, and the LCD control board is moved into the base 42, thus the conditions and basis for thinning and lightening the overall structural layout of the rear circuit board of the liquid crystal LCD display 41 of the inventive wireless human-machine interactive device are provided.

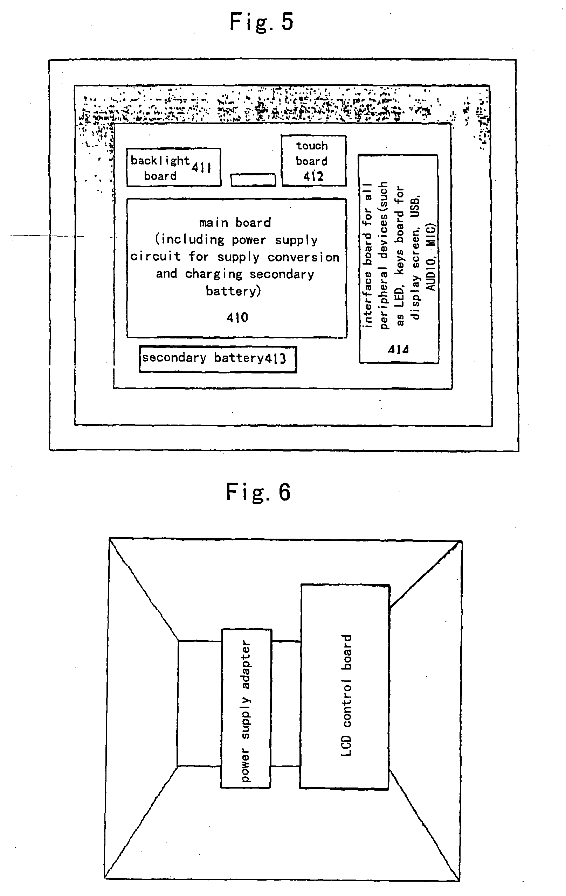

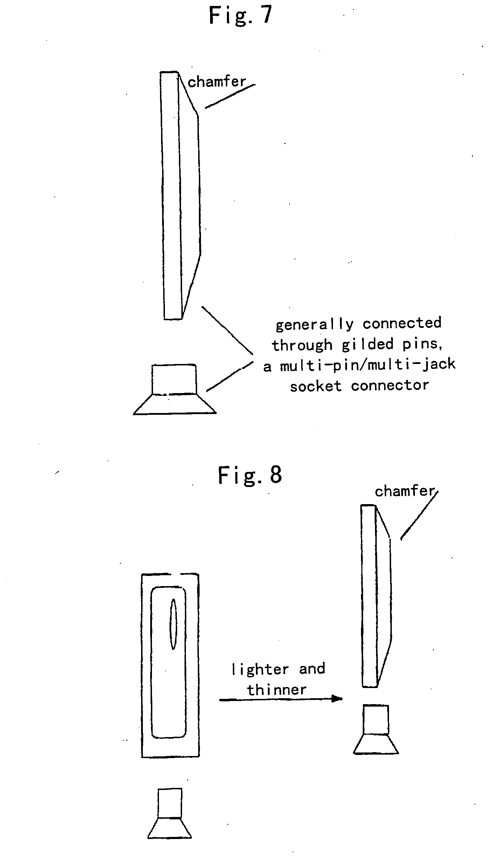

Referring to Figs. 5 and 7, the wireless human-machine interactive device of personal computer according to the present invention includes two parts, a display and a base. The display can be independently used separately from the base. A main board 410, a backlight 411, a touch screen control board 412, a secondary battery 413 and an interface board 414 for integrating all the peripheral devices are mounted in a rear space of the display. The main board 410 further includes a central processing unit (CPU), a memory, a full-duplex wireless communication module and a data receiver and decompressor module, a display output module of a liquid crystal display, a audio output module, a bus extension port, a peripheral device interface circuit module. The peripheral device interface board 414 integrates various input/output (I/O) interfaces such as a control keys board for a display screen, an indicative light circuit, a USB, an audio and a microphone. Although a power supply circuit for providing voltage conversion for the main board and charging the secondary battery is additionally provided on the main board 410 so that the area of the main board is a little enlarged, a peripheral space of the rear part of the display is still vacated, when comparing with other technical measures for reducing or lightening the circuit board and the battery such as removing the LCD control board and the power supply board out, omitting the VGA one-to-two control board and reducing the number of cores of the battery. The hatched portion shown in Fig. 5 represents the reduced area. Therefore, it reserves a developing space for the proceeding of the circuits of the wireless human-machine interactive device and their functions, and also it is possible to set chamfers with a larger slope as shown in Fig. 7 at the peripheral edges of the rear panel of the display in order to improve the visual feeling and have a comfortable feeling of holding when moving and easy to continuously hold on.

Referring to Fig. 6, the space in the base is very large, and there is a lot of space left after the LCD control board and the power supply board for feeding a DC supply directly converted from the commercial supply to the LCD control board is settled therein. In the layout structure obtained from the inventive relocation of respective circuit boards based on the circuit improvements, since the elements with a larger height such as large capacities originally mounted on the LCD control board and the power supply board within the display are moved into the base, and the overall circuit power consumption within the display is reduced because of the transition and reduction of the above circuits, and with experimental tests, those elements with a larger height such as large capacities still remained on the circuit boards in the rear part of the display are replaced with capacities with a lower capacity and a smaller height, therefore, the thickness of the inventive display can be controlled within 25 millimeters.

Referring to Fig. 8, the inventive idea of moving the LCD control board into the display base according to the invention can also be applied to a normal liquid crystal display of a personal computer. Said liquid crystal display is also composed of a display main body and a base. A backlight board, control keys for a display screen and an indicative light circuit board are mounted in a rear space of the display main body, while an LCD control board and the power supply board are moved into the space of the base for installation. The electrical connections between the base and the display are achieved by gilded pins (golden finger) or a multi-pin/multi-jack connector. Since a lot of spaces in the rear part of the display are vacated, chamfers with a larger slope can be provided at the peripheral edges of the rear panel of the display, and the thickness thereof will not exceed 25 millimeters. The left-hand side of Fig. 8 shows a side view of the current display, and the right-hand side of Fig. 8 shows a side view of the display after applying the present invention. With the comparison, it is needless to say that the display becomes thinner.

The experimental tests on the model machine according to the invention are already performed. The battery in the original display needs a three-series two-parallel one, and after applying the inventive structural layout of the circuit boards, the battery employed is only a three-series on-parallel one, which results in a reduction of 0.2 kilograms in weight.

The above description is only preferred embodiments of the present invention and is not intended to limit the protection scope of the present invention.

## Claims

1. A wireless human-machine interactive device of personal computer comprising two parts, a display and a base, in which the display can be independently used separately from the base, which is **characterized in that**:
a display output module comprising at least a central processing unit (CPU) and a liquid crystal display (LCD), a main board containing a supply circuit for providing a voltage conversion for the main board and charging a secondary battery, a backlight board, a touch screen control board, a peripheral interface board comprising all Input/Output (I/O) device interfaces and a secondary battery are mounted on a rear part of the display;
an LCD control board and a supply adapter for converting a commercial supply into a direct current (DC) supply and supplying power to the LCD control board is mounted in the base; and
the electrical connections between the base and the display are achieved by gilded pins (golden finger) or a multi-pin/multi-jack connector.

2. The wireless human-machine interactive device of personal computer according to Claim 1, wherein a memory, a full-duplex wireless communication module, a data receiver and decompressor module, a audio output module, a bus extension port and a peripheral interface circuit module are further mounted on the main board in said display.

3. The wireless human-machine interactive device of personal computer according to Claim 1, wherein control keys for a display screen and an indicative light circuit board are further mounted on said peripheral interface board.

4. The wireless human-machine interactive device of personal computer according to Claim 1, wherein a thickness of said display is no more than 25 millimeters.

5. The wireless human-machine interactive device of personal computer according to Claim 1, wherein the main board of said display forms a wireless data communication connection link directly with a main body of the personal computer, and the circuits on the main board form information exchange links with the circuits on the LCD control board within the base through the gilded pins (golden finger)or the multi-pin/multi-jack connector between the display and the base.

6. The wireless human-machine interactive device of personal computer according to Claim 1, wherein the secondary battery mounted on the rear part of said display is a three-series one-parallel one.

7. A liquid crystal display of personal computer comprising two parts, a display main body and a base, which is **characterized in that** a backlight board, control keys for a display screen and a indicative light circuit board are mounted on a rear part of said display main body; an LCD control board and a power supply board are mounted in the base; and the electrical connections between the base and the display are achieved by gilded pins (golden finger) or a multi-pin/multi-jack connector.

8. The liquid crystal display of personal computer according to Claim 7, wherein a thickness of said display main body is no more than 25 millimeters.
